# EUROPÄISCHE PATENTSCHRIFT

(11) **EP 1 523 379 B1**
(45) Veröffentlichungstag und Bekanntmachung des Hinweises auf die Patenterteilung: **21.06.2006**
(21) Anmeldenummer: 03732443.1
(22) Anmeldetag: 23.05.2003
(51) Int. Cl.: B01D 29/90, B01D 29/92

(54) **FILTERELEMENT ZUM FILTRIEREN VON FLUIDEN**
FILTER ELEMENT FOR FILTERING FLUIDS
ELEMENT DE FILTRE POUR FILTRER DES FLUIDES

(30) Priorität: 24.07.2002 DE 10233475
(43) Veröffentlichungstag der Anmeldung: 20.04.2005
(73) Patentinhaber: HYDAC FILTERTECHNIK GMBH, 66280 Sulzbach/Saar (DE)
(72) Erfinder: MERTENS, Helmut, 66292 Riegelsberg (DE); SCHUNK, Andreas, 66914 Waldmohr (DE)
(74) Vertreter: Bartels & Partner
(86) Internationale Anmeldenummer: PCT/EP2003/005385
(87) Internationale Veröffentlichungsnummer: WO 2004/014518

(56) Entgegenhaltungen:
- DE-A- 19 626 196
- DE-U- 9 408 546
- FR-A- 2 782 019
- US-A- 360 441
- US-A- 3 750 889
- US-A- 4 204 967
- US-A- 6 110 368

## Beschreibung

Die Erfindung betrifft ein Filterelement zum Filtrieren von Fluiden gemäß der Merkmalsausgestaltung des Oberbegriffes des Patentanspruches 1.

Durch die DE-A-198 37 257 ist als Filterelement ein Filtermodul bekannt, das bezüglich seines Aufbaus vereinfacht ist und auch die Herstellung eines Stufenfilters ermöglicht. Jede Lage des Filtermediums als Filtereinheit besteht aus einer Schicht aus Tiefenfiltermaterial, wobei diese Schichten sich mit Abstandshaltern abwechseln, bestehend aus drainierenden Einzelschichten, die zusammen mit den Filterschichten spaltenfrei in horizontaler Übereinanderlage quer zur Längsachse des Filtermoduls gestapelt sind. Die drainierenden Schichten sind dabei wechselseitig zum Fittrat-/Unfiltratraum abgedichtet, wobei mit der bekannten Lösung eine an sich beliebige Anordnung von Filterschichten erreichbar ist.

Durch die Verwendung von Schichten sowohl für die Abstandshalter als auch für die Filterlagen bietet die bekannte Lösung die Möglichkeit, alle Schichten horizontal zu stapeln, ohne dass hier separate Stützelemente beispielsweise in Form von Stützrohren notwendig wären, wie dies bei übl i-chen Filterelementen ansonsten regelmäßig der Fall ist. Darüber hinaus besteht die Möglichkeit, beliebige Filterschichten m it unterschiedlicher Fil terfeinheit in beliebiger Reihenfolge zu stapeln.

Es hat sich jedoch in der Praxis gezeigt, dass insbesondere bei hohen Drükken des zu filtrierenden Fluids es zu einem Versagen des bekannten Filterelementes kommen kann, beispielsweise weil sich die Tiefenfiltermaterialschichten nicht hinreichend an den Abstandshaltern in Form der drainierenden Schichten abstützen können. Letzteres kann zum Versagen des gesamten Filterelementes führen.

Durch die EP-B-0 817 668 ist eine Filtervorrichtung bekannt, die vorzugswei se als Nebenstromfilteraggregat ausgebildet ist und insbesondere zur Filterung von Hydraulikölvorräten mit einer motorisch angetriebenen Pumpe und einem fest montierten, mit einem Deckel verschließbaren Filtergehäuse dient. Das Filtergehäuse weist ein auswechselbares Filterelement auf, das von innen nach außen durchströmbar ist und das zwei konzentrisch zu seiner Längsachse angeordnete zylindrische Filtereinheiten aufweist, die zwischen sich einen radialen Abstand aufweisen und die endseitig zum indest von verschiedenen Deckelteilen aufgenommen sind. Das zwischen dem radialen Abstand der beiden Filtereinheiten eingeleitete Unfiltrat wird in beiden Richtungen durch die jeweils zugeordnete Filtereinheit hindu rchgeleitet und derart filtriert. Demgemäß sind die Filtereinheiten unter Bildung des gattungsgemäßen Standes der Technik nach innen hin sowie nach außen von einem Stützelement in Form eines Stützrohres umgeben, das der jeweiligen Reinseite des bekannten Filterelementes zugewandt ist. Wird über das Deckelteil der bekannten Lösung das Filterelement aus Filtergehäuse entfernt, bildet das Filtergehäuse ein Aufnahmegefäß für das Schmutzöl beim Wechseln des Filterelementes aus und es verbleibt kein verschmutztes Fluid innerhalb der Filtervorrichtung, was bei einem erneuten Anlauf derselben zu Verschmutzungen in einem Hydraulikkreislauf führen würde. Obwohl im Hinblick auf die eingesetzten Stützelemente in Form der Stützrohre eine hinreichende und sichere Abstützung der eigentlichen Filtereinheiten bzw. des Filtermaterials erfolgt und dergestalt ein Versagen des Filterelementes ausgeschlossen ist, weisen die zylindrischen Stützrohre innen- und außenumfangsseitig nur glatte Führungsflächen auf, zwischen denen Durchtrittsstellen für das Fluid gebildet sind. Mithin erfolgt eine Durchströmung der bekannten Stützrohre im wesentlichen quer zu ihrer Längsausrichtung, so dass dergestalt die Ftuidführung eingeschränkt ist und für spezielle Filtrationsaufgaben, beispielsweise wenn man die Filtereinheiten mit dem Filtermaterial in drainierender Weise vom Fluid befreien will, ist die bekannte Lösung nicht verwendbar.

Durch die DE-A-44 30 341 ist ein Filterelement zum Filtrieren von Fluid bekannt mit einem hohlzylindrischen Stützelement für einen mit einem abnehmbaren Deckel verschlossenen becherförmigen Fluidfilter, insbesondere für Öl oder Kraftstoff, mit einem Filtergehäuse, in das eine auswechselbare Filtereinheit eingesetzt ist, die aus einer sternförmig gefalteten Filterstoffbahn mit an deren beiden Stirnseiten dichtend angebrachten Stirnscheiben besteht, wobei die im Einbauzustand der Filtereinheit deckelförmige Stirnscheibe eine Fluidöffnung ausbildet. Das dahingehende Stützelement verhindert ein Kollabieren der Filtereinheit bei seiner Durchströmung in der einen Richtung durch den zu filternden Fluidstrom und mit der bekannten Lösung ist es möglich, das Stützelement bei jedem Wechsel der Filtereinheit im Filtergehäuse zu belassen, so dass das an sich keinem Verschleiß unterliegende Stützelement zusammen mit der Filtereinheit nicht entsorgt zu werden braucht.

Um eine verbesserte Fluidführung zwischen Stützelement und der ihn umfassenden Filtereinheit zu erreichen, ist bei einer besonders bevorzugten Ausführungsform vorgesehen, Stützvorsprünge in der Art einer 4-gängigen Wendel längs des Außenumfanges um das rohrartige Stützelement herumzuführen, um derart den Fluidstrom um die Längsachse des Filterelementes mehrfach um 360° umzulenken. Dabei ist es für dieses bekannte Ausführungsbeispiel des Stützelementes charakteristisch, dass die Stützvorsprünge Abschnitte mit unterschiedlichen Steigungen aufweisen. Hierdurch läßt sich zwischen den genannten Stützvorsprüngen eine parallele Anordnung von insgesamt vier schraubenlinienförmigen Zwischenräumen bilden, die für die gerichtete Fluidströmung um den Außenumfang des zentralen Teils herum bis zu den in dessen oberem Teil vorgesehenen Fluid-Überströmöff nungen zur Verfügung stehen. Bedingt durch den wende Iförmigen Verlauf der die Kanäle bildenden Stützvorsprünge ist eine durchgehende Fluidführung längs des rohrförmigen Stützelementes verhindert und aufgrund der genannten Mehrfachumlenkung des Fluidstromes kommt es zu einem ungünstigen Fluidströmungsverlauf zwischen dem Stützelement und der ihn umgebenden, sich an ihm abstützenden Filtereinheit.

Eine vergleichbare Anordnung ist gemäß einem Ausführungsbeispiel nach der Fig.3 in der WO 01/91881 offenbart, wobei bei dieser bekannten Lösung nur eine schraubenförmige, das Stützelement umfassende Kanalführung dem Fluidtransport und dem Abstützen der Filtereiraheit innerhalb des Filtergehäuses dient. Auch hierbei kommt es zu einer energetisch ungünstigen Mehrfachumlenkung des Fluidstromes um die Längsachse des Filterelementes und die den wendelförmigen Kanal bildenden Stützvorsprünge des Stützelementes bilden nur eine geringe Auflagefläche für die abzustützende Filtereinheit aus, so dass insoweit eine sichere Abstützung, insbesondere bei größeren Fluiddifferenzdrücken, unterbleibt.
Des weiteren ist durch die JP-2001293312 A eine Filtervorrichtung mit in einem Filtergehäuse angeordneter Filtereinheit bekannt, bei der das Stützelement mit einer Vielzahl außenumfangsseitig angeordneter, geradlinig verlaufender Fließkanäle versehen ist, die parallel zur Längsachse des Filterelementes orientiert dem Fluidtransport innerhalb der Filtervorrichtung dienen. Trotz der hiermit erreichbaren guten Abstützung für die Filtereinheit ist aufgrund der bekannten linearen Fluidführung die Filtrationsleistung beeinträchtigt.

Durch die DE 196 26 196 A1 ist eine gattungsgemäße Filtrationseinheit mit einem patronenartigen Filterelement zur Filtration von Fluiden bekannt. Die bekannte Filträtionseinheit besitzt keine gesonderte Rückstausicherung und das patronenartige Filterelement ist in einem umschließenden Gehäuse angeordnet, wobei sich an der Innenseite der rohrförmigen Gehäusewand Strömungskanäle in der Art einer Drallführung befinden, die mit mindestens einem Fluidanschluß in kommunizierender Verbindung stehen. Hierdurch werden gleichmäßige Strömungsverhältnisse zwischen Filterelement und Gehäusewand bei geringem Totvolumen erreicht, sowie eine größere Filtrationsleistung, verlängerte Standzeiten und Lebensdauer. Die bekannte Filtrationseinheit ist in der Form von Filterkerzen oder Filterkapsulen vielfältigst verwendbar und in Abhängigkeit von der Filterbestückung des patronenartigen Filterelementes kann die Filtrationseinheit beispielsweise für die Vor-und Endfiltration im Bereich der Reversosmose, der Ultra und Mikrofiltration unterschiedlicher Medien einschließlich der Sterilfiltration eingesetzt werden. Eine vergleichbare Filtrationseinheit zu der vorstehend beschriebenen Lösung ist auch durch die US-A-4 204 967 aufgezeigt.

Ausgehend von diesem Stand der Technik liegt der Erfindung die Aufgabe zugrunde, ein Filterelement zum Filtrieren von Fluid zu schaffen, das einen sicheren und versagensfreien Betrieb zuläßt und mit dem in energetisch günstiger Weise hohe Filtrationsleistungen erreichbar sind. Eine dahingehende Aufgabe löst ein Filterelement mit den Merkmalen des Patentanspruches 1 in seiner Gesamtheit.

Dadurch, dass gemäß dem kennzeichnenden Teil des Patentanspruches 1 insgesamt drei Stützelemente und drei Filtereinheiten vorhanden sind, die sich in wechselnder Abfolge konzentrisch um die Längsachse des Filterelementes anordnen, das die zuinnerst und die zuäußerst angeordnete Filtereinheit von außen nach innen von dem Fluidstrom in Richtung auf die Reinseite des Filterelementes durchströmbar ist, und dass die dazwischenliegende Filtereinheit von beiden Seiten nach innen und außen anströmbar ist, wird der zur Verfügung stehende Einbauraum in einem Filtergehäuse - einer Filtervorrichtung effektiver genutzt, wodurch sich eine Steigerung der Schmutzaufnahmekapazität erreichen läßt und der Durchflußwiderstand des Filterelementes ist durch die Vergrößerung der Filterfläche entsprechend verringert, so dass das gesamte Filterelement für den Durchströmungsvorgang als energetisch günstig zu bezeichnen ist. Durch die aufgezeigte Anordnung gilt für jedes Drainagerohr, dass der Druck auf seiner Innenseite dem Druck auf seiner Außenseite entspricht, so dass für das Filterelement insgesamt eine druckkompensierte Anordnung erreicht ist, was sich auf die Lebensdauer des Filterelementes günstig auswirkt.

Da die Kanäle mit ihren sie begrenzenden Längsrippen in gewundenen Bahnen in einer Drallführung ohne Mehrfachumlenkung längs des Stützrohres geführt sind, hat sich gezeigt, dass eine dahingehend gewundene Drallführung zu geringen Reibungsverlusten bei der Fluidführung führt, was sich wiederum energetisch günstig auf das Durchflußverhalten des erfindungsgemäßen Filterelementes auswirkt. Die dahingehende Drallführung ist dabei in der Art von schraubenlinienartigen Zügen geringer Neigung ausgebildet, wie man sie im Lauf oder Rohr einer Feuerwaffe anbringt, durch die das Geschoß in eine stabilisierende Drehbewegung gebracht wird. Die genannte Drallführung erlaubt also eine Kanalführung, die frei von Mehrfachumlenkungen sich längs des jeweiligen Stützelementes in geneigter Ausrichtung zu seiner Längsachse erstreckt. Mit der erfindungsgemäßen Filteretement-Lösung lassen sich darüber hinaus auch anders gelagerte Filtrationsaufgaben Lösen, beispielsweise wenn man eine Filtereinheit des Elementes in drainierender Weise von im höhen Maße anfallendem Fluid zur Verbesserung der Filtrationsleistung zeitlich rasch zu befreien hat.

Vorzugsweise ist dabei das jeweilige Stützelement aus einem Stützrohr gebildet und die jeweiligen Kanäle sind von seitlich vorstehenden Längsrippen des Stützrohres begrenzt, was einer linearen Fluidführung zugute kommt, und die Kavitäts- und Strömungsverluste lassen sich dergestalt gering halten, so dass das Filterelement vom Strömungsverhalten her als energetisch günstig zu bezeichnen ist.

Sofern bei einer bevorzugten Ausführungsform`des erfindungsgemäße Filterelementes die Kanäle sowohl innen- als auch außenumfangsseitig am Stützrohr angeordnet sind, lassen sich die Fluidtransportleistungen noch weiter verbessern und in beiden Richtungen für angrenzendes Filtermaterial dergestalt eine Abstützmöglichkeit finden.
Bei einer weiteren bevorzugten Ausführungsform des erfindungsgemäßen Filterelementes können die Längsrippen stegartig auf das Stützrohr aufgesetzt sein oder die unmittelbar benachbart angeordneten Längsrippen sind paarweise miteinander verbunden und bilden außenumfangsseitig eine Stützfläche und innenumfangsseitig den Nutgrund der einzelnen Kanäle. Gegenüber der stegartigen Längsri ppenanordnung bietet die außenumfangsseitige Stützfläche ebenso wie der Nutgrund an der Innern umfangsseite eine verbreiterte Anlagefläche aus, so dass dergestalt eine verbesserte Abstützung für das Filtermaterial der jeweiligen Filtereinheit erreicht ist.

Weitere vorteilhafte Ausführungsformen des erfindungsgemäßen Filtereiementes sind Gegenstand der weiteren Unteransprüche.

Im folgenden wird das erfindungsgemäße Filterelement anhand der Zeichnung näher erläutert. Dabei zeigen in perspektivischer und nicht maßstäblicher Darstellung die
- Fig.1: in der Art eines Schnittes eine Längsansicht durch das Filterelement;
- Fig.2: in perspektivischer Ansicht eine Draufsicht auf das Filterelement nach der Fig.1 ohne Deckelteile und ohne die Filtereinheiten und
- Fig.3: in perspektivischer Ansicht eine geänderte Ausführungsform eines Stützelementes in Form eines Stützrohres gegenüber den eingesetzten Stützelementen nach der Fig.2.

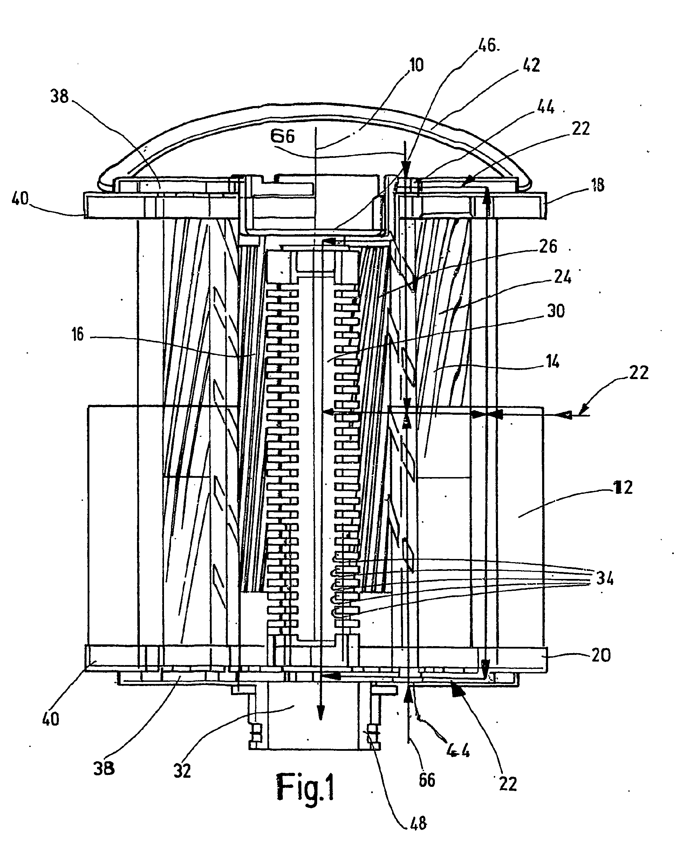

Eine Ausführungsform des erfindungsgemäßen Filterelementes ist in der Art eines Längsschnittes in der Fig.1 dargestellt. Das Filterelement dient zum Filtrieren von Fluiden, insbesondere in Form von verschmutztem H-ydrauliköl od. dgl.. Um die Längsachse 10 des Filterelementes sind konzentrisch zu diesem drei Filtereinheiten 12,14,16 angeordnet. Der besseren Darstellung wegen wurde die zuäußerst angeordnete Filtereinheit 12 nur mit ihrer halben Axiallänge wiedergegeben. Die genannten Filtereinheiten 12,14,16 weisen zwischen sich jeweils einen radialen Abstand auf und sind i nnenseitig von zwei Deckelteilen 18,20 in der Art von Endkappen aufgenommen. Insbesondere sind die Enden der Filtereinheiten 12,14,16 mit den beiden Deckelteilen 18,20 über ein Klebstoffbett od. dgl. verbindbar.

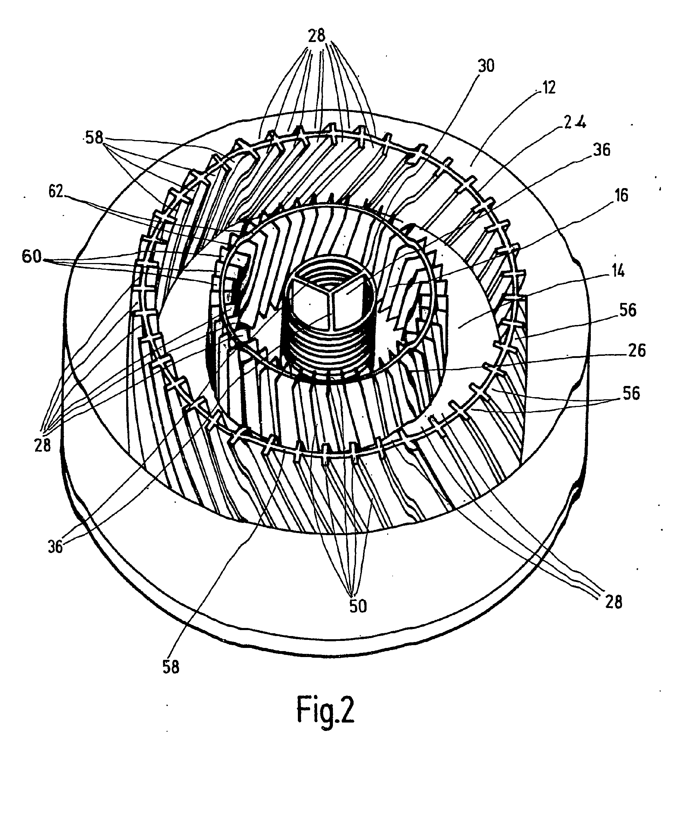

In den Deckelteilen 18,20 ist eine als Ganz es mit 22 bezeichnete F luidführung vorhanden. Die Art des Fluiddurchflusses und die Art der internen Fluidführung 22 sind in der Fig.1 mit der entsprechenden Pfeildarstellung wiedergegeben, wobei in Pfeilrichtung die jeweilige Durchströmung durch das Filterelement erfolgt. Des weiteren ist in den jeweiligen Abstän den zwischen den Filtereinheiten 12,14,16 ein Stützelement 24,26 in der Art eines Stütz- und/oder Drainagerohres gesetzt. In Abhängigkeit der Strömungsrichtung des zu filtrierenden Fluids (Unfiltrat) wird dergestalt über die zuordenbaren Stützelemente 24,26 mindestens ein Teil der benachbart angrenzenden Filtereinheiten 1 2 und 14 in Durchströmungsrichtung wirksam abgestützt, um dergestalt ein Ausbeulen der jeweiligen Filtereinheit 12,14,16 zu vermeiden. Des weiteren sind die Stützelemente 24,26 mit Kanälen 28 als weiterer Teil der internen Fluidführung 22 versehen. Die dahingehenden Kanäle 28 sind für die beiden Stützelemente 24 und 26 für eine Ausführungsform an Stützelementen 24,26 in der Fig.2 dargestellt.

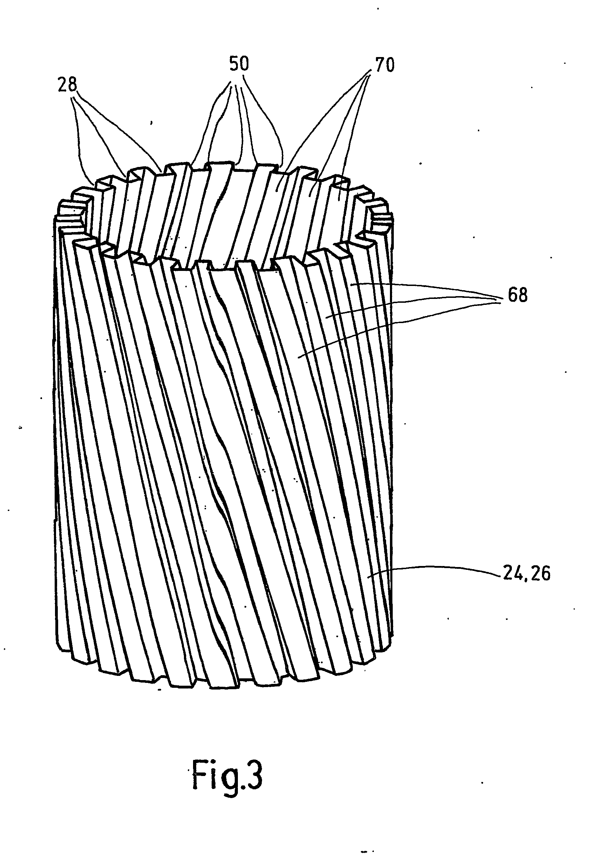

Die jeweilige Filtereinheit 12,14,16 ist aus einer zylindrischen Filtermatte gebildet, wobei die dahingehende Filtermatte gewickelt oder gefaltet sein kann und aus einem auf diesem Gebiet üblichen Filtermaterial besteht. Wie sich des weiteren aus der Fig.1 ergibt, ist die jeweilige Filtermatte mit einem gleichen Längenmaß versehen, wie die anderen eingesetzten zylindrischen Filtermatten, gemessen in Richtung der Längsachse 10 des Filterelementes. Die in Blickrichtung auf die Fig.1 und 2 gesehen zuinnerst an geordnete Filtereinheit 16 stützt sich innenumfangsseitig an einem Stütz rohr 30 ab, dessen Inneres an die Reinseite 32 des Filterelementes (s. Fig-1) angeschlossen ist. Der Aufbau des dahingehenden Stützrohres 30 ist in konventioneller Bauart ausgeführt und aus anderem Zusammenhang bekannt, wobei es aus einzelnen übereinander angeordneten Ringsegmenten 34 besteht, die zwischen sich Fluiddurchlässe für den Durchlaß des Filtrates begrenzen und die über drei gleiche Winkel zwischen sich begrenzende Stützstege 36 (s. Fig.2) auf Abstand zueinander gehalten sind. Somit stützt das innere konventionell ausgebildete Stützrohr 30 die zuinnerst liegende Filtereinheit 16 bei einer Durchströmungsrichtung von außen (vgl. Pfeildarstellung 22) nach innen hin ab. B ei der Ausführungsform nach der Fig.2 sind insgesamt 40 Fluidkanäle 28 sowohl innen- als auch außenumfangsseitig an jedem der beiden Stützelemente 24,26 angeordnet. Vorzugsweise finden jedenfalls immer mehr als 20 Fluidkanäle 28 Anwendung bei einer der genannten Stützelemente 24,26. So sind es bei der Ausführungsform nach der Fig.3, die nachfolgend noch näher beschrieben werden wird, sowohl innen- als auch außenumfangsseitig jeweils 24 Kanäle 28.

Das in Blickrichtung auf die Fig. 1 gesehen obere Deckelteil 18 besteht im wesentlichen aus zwei Teilen 38,40, die jedoch einstückig miteinander verbunden sein können. Der obere Teil 38 ist mit einer aufstellbaren Handhabe 42 in der Art eines Griffes versehen, um beispielsweise bei verbrauchtem Filterelement dieses aus dem Filtergehäuse einer Fi Itervorrichtung (nicht dargestellt) herauszunehmen und dergestalt gegen ein neues Filterelement auszutauschen. Das verschmutzte und unfiltrierte Fluid (Unfiltrat) kann über diametral zur Längsachse 10 angeordnete Einlässe 44 in der Art von Bohrungen dem Filterelement zugeführt werden, wobei die dahingehenden Einlässe 44 beide Teile 38 und 40 des oberen Deckelteils 18 durchgreifen. Das obere Deckel teil 40 ist in der Mitte absatzartig nach unten verlängert und umgreift mittig einen zentralen Kanal 46, der innerhalb des Filterelements zur Reinseite 32 über das Stützrohr 30 führt.

Des weiteren sind im oberen Deckelteil 18 als Teil der internen Fluidführung 22 Strömungskanäle (nicht dargestellt) vorgesehen, die es erlauben, gemäß der Teildarstellung nach der Fig.1 bereits filtriertes Fluid über die Filtereinheiten 12 und 14 aufzunehmen und in Richtung des zentralen Kanals 46 auf die Reinseite 32 des Filterelementes zu transportieren. Das in Blickrichtung auf die Fig.1 gesehen untere Deckelteil 20 ist entsprechend wie das obere Deckelteil 18 ausgebildet und anstelle der Handhabe 42 weist jedoch das untere Deckelteil 20 die Reinseite 32 des Filterelementes auf, die von einem Umhüllungsstutzen 48 umgeben ist.

Wie insbesondere die Fig.2 zeigt, die eine Ausführungsform des Filterelementes betrifft, sind die beiden Stützelemente 24 und 26 zylindrisch ausgebildet und weisen entlang ihres Außen- und Innenumfanges jeweils Längskanäle 56,58,60 und 62 auf, die als Teil der internen Fluidführung 22 anzusehen sind. Der jeweilige Längskanal 56,58,60 und 62 des zuordenbaren Abstützelementes 24 bzw. 26 ist äquidistant zum nächsten nachfolgenden Längskanal auf der Innen- oder Außenseite des dahingehenden Stützelementes angeordnet, wobei die Längskanäle 56,58,60 und 62 derart entlang der Längsachse 10 des Filterelementes eine Verwindung aufweisen, dass eine Art Drallführung für das zu transportierende Fluid erreicht ist.

Das genannte Filterelement dient für den Ei nbau in eine übliche Filtervorrichtung, die eine Einlaßstelle für das gefilterte Fluid und eine Auslaßstelle für das filtrierte Fluid (Filtrat) aufweist (nicht dargestellt).

Um nunmehr die Funktion des erfindungsgemäßen Filterelementes näher zu erläutern, wird diese anhand der Pfeildarstellung in der Fig.1a ufgezeigt.

In Blickrichtung auf die Fig.1 gesehen ist rechts von der Längsachse 10 des Filterelementes die interne Fluidführung 22 näher dargestellt. Über eine nicht näher dargestellte Einlaßstelle im Filtergehäuse für das in Fig.1 gezeigte Filterelement strömt Unfiltrat von außen nach innen durch die erste Filtereinheit. Die im Unfiltrat vorhandenen Verschmutzungen bleiben dann in der ersten Filtereinheit 12 zurück und der Fluidstrom an Filtratwi rd allseitig und außenumfangsseitig über die äußeren Längskanäle 56 des ersten Stützelementes 24 aufgenommen und zu gleichen Teilen nach oben und unten hin in das obere Deckelteil 18 sowie in das untere Deckelteil 20 abgeleitet. Das Filtrat wird dann über die interne Fluidführung 22 in den Deckelteilen in den jeweiligen Unterteil aufgenommen und in Richtung des zentralen Kanals 46 transportiert, von wo aus die Ab leitung über die Mitte des Stützrohres 30 zwischen den Stützstegen 36 in Richtung der Reinseite 32 erfolgt. Gleichzeitig wird in Richtung der Pfeile 66 weiteres Unfiltrat über das nicht näher dargestellte Filtergehäuse in das Filterelement eingebracht, und zwar über die Einlässe 44, die von den sonstigen internen FI uidführungen innerhalb der Deckelteile 18,20 fluid dicht getrennt sind.

Das über die Einlässe 44 zugeführte Unfiltrat gelangt jeweils über das obere Deckelteil 18 sowie das untere Deckelteil 20 in die Längskanäle 60 und 62 des zweiten Stützelemente 26 und das dahingehende Unfiltrat wird dann gleichmäßig in beiden Richtungen einmal durch die innere dritte Filtereinheit 16 geschickt und einmal durch die mittlere Filtere inheit 14. Der zuletzt genannte Filtratstrom wird dann wiederum über die inneren Leitkanäle 58 des ersten Stüztelementes 24 in die Deckelteile 18,20 transportiert und gelangtwiederum über die interne Deckelfluidführung auf die Reinseite 32, des Filterelementes wie beschrieben. Der andere abgezweigte Filtratstrom gelangt dann über die dritte Filtereinheit 16 in das innere des Stützrohres 30 und von dort aus gleichfalls zur Reinseite 32 des Filterelementes. Die dahingehende interne Fluidführung 22 ist für einen Strörnungspfad beispielhaft dargestellt, wobei diese, wie beschrieben, radial außenumfangsseitig entlang der einzelnen Filtereinheiten 12,14,16 sowie den Stützelementen 24,26 stattfindet.

Durch die konzentrische Anordnung mehrerer Filtermatten um das genannte Stützrohr 30, wobei sich jeweils zwischen zwei Filtermatten ein Drainagerohr i n Form der Stützelemente 24,26 befindet, wird der zur Verfügung stehende Einbauraum in einem Filtergehäuse einer Filtervorrichtung (nicht dargestellt) effektiver genutzt, wodurch sich eine Steigerung der Schmutzaufnahmekapazität erreichen läßt und der Durchflußwiderstand des Filterelementes ist durch die Vergrößerung der Filterfläche entsprechend verringert, so dass das gesamte Filterelement für den Durchströmungsvorgang als energetisch günstig zu bezeichnen ist. Wie darges-tellt, hat dabei ein Tei I der Drainagerohre die Aufgabe, das filtrierte Fluid in beiden Endkappen in Form der Deckelteile 18,20 zuzuführen, wohingegen ein anderer Teil die Aufgabe hat, unfiltri ertes Fluid (Unfiltrat) von beiden Endkappen aus den Filtermatten zuzuführen. Die genannten Drainagerohre als Stützelemente 24,26, die gleichfal Is wie das Stützrohr 30 eine Stützfunktion für die zuordenbaren Filtereinheiten 12,14,16 ausbilden, können gemäß der Darstellung nach der Fig.3 auch in der Art eines Wellrohres oder aber auch als aufeinandergestapelte Ringe mit Bohrungen (nicht dargestellt) ausgebildet sein. Durch die gezeigte Anordnung gemäß der Darstellung nach der Fig.1 gilt für jedes Drainagerohr, dass der Druck auf seiner Innenseite dem Druck auf seiner Außenseite entspricht, so dass für das Filterelement insgesamt eine druckkompensierte Anordnung erreicht ist, was sich auf die Lebensdauer des Filterelermentes günstig auswirkt.

Bei der anders gearteten Ausführungsform eines Stützelementes 24,26 nach der Fig.3 sind die unmittelbar benachbart angeordneten Längsrippen 50 paarweise miteinander verbunden und bilden außenumfangsseit ig eine Stützfläche 68 sowie innenumfangsseitig einen Nutgrund 70 der einzelnen Kanäle 28 aus. Gegenüber den Stegenden der Längsrippen 50 nach der ersten Ausführungsform gemäß Darstellung nach der Fig.2 sind mithin über die Stützflächen 68 und den Nutgrund 70 die abstützenden Anlageflächen für die zuordenbaren Filtereinheiten 12,1 4,16 erhöht, was die Ausführungsform nach der Fig. 3 als besonders geeignet erscheinen läßt, sofern die dahingehenden Filtereinheiten und Filtermaterialien hohen Druck- und Druckwechselbeanspruchungen bei der Fluiddurchströmung ausgesetzt sind.
Die Ausführungsform nach der Fig.3 kann mit der Ausführungsform nach der Fig.2 für ein Filterelement kombiniert werden, beispielsweise indem die Ausführungsform nach der Fig.3 das zuinnerst liegende Stützelement 26 ausbildet und die Anordnung mit den hochgestellten Längsrippen 50 bildet das zuäußerst liegende Stützelement 24 aus. Es können aber auch zwei oder mehr Stützelemente gemäß der Ausgestaltung nach der Fig.3 konzentrisch zueinander angeordnet ein Drainagerohrsystem für ein Filterelement ausbilden - Sofern in Abhängigkeit der Filtrationsaufgabe dies notwendig sein sollte, kann das jeweilige Stützelement 24,26 auch mit nicht näher dargestellten Perforationen versehen sein, um dergestalt einen Fluiddürchtritt quer zur Längsachse 10 des Fi Iterelementes zu erreichen. Die dahingehenden Perforationen (nicht dargestellt) können die Kanäle 28 durchgreifen aber auch bei der Ausführungsform nach der Fig.3 die Stützfläche 68 nebst Nutgrund 70. Das in der Art eines Wellrohres ausgebildete Stützelement 24,26 nach der Fig.3 läßt sich als Extrusionsteil auch ohne weiteres aus Kunststoffmaterial gewinnen.

## Patentansprüche

1. Filterelement zum Filtrieren von Fluiden mit mindestens einer konzentrisch um seine Längsachse (10) angeordneten Filtereinheit (12,14,16), die sich in Richtung der jeweiligen Durchströmung mit dem Fluidstrom an mindestens einem Stützelement (24,26,30) abstützt, wobei zumindest ein Teil der Stützelemente (24,26) zumindest auf ihrer der Filtereinheit (12,14,16) zugewandten Seite mit Kanälen (28) zur Fluidführung (22) versehen ist, wobei die Kanäle (28) mit ihren sie begrenzenden Längsrippen (50) in gewundenen Bahnen sich längs des Stützelementes (24,26) erstrecken, wobei der jeweilige Kanal (28) mit seinen beiden freien Enden an den gegenüberliegenden Enden des jeweiligen Stützelementes (24,26) austritt, wobei die Kanäle (28) sich frei von Mehrfachumlenkungen des Fluidstromes längs des Stützelementes durchgehend erstrecken, und wobei die Kanäle (28) nur teilweise das jeweilige Stützelement (24,28) unter Bildung einer Drallführung für den Fluidstrom umgreifen, **dadurch gekennzeichnet, dass** insgesamt drei Stützelemente (24, 26, 30) und drei Filtereinheiten (12, 14, 16) vorhanden sind, die sich in wechselnder Abfolge konzentrisch um die Längsachse (10) des Filterelementes anordnen, dass die zuinnerst und die zuäußerst angeordnete Filtereinheit (16, 12) von außen nach innen von dem Fluidstrom in Richtung auf die Reinseite (32) des Filterelementes durchströmbar ist, und dass die dazwischenliegende Filtereinheit (14) von beiden Seiten nach innen und außen anströmbar ist.

2. Filterelement nach Anspruch 1, **dadurch gekennzeichnet, dass** das jeweilige Stützelement (24,26,30) aus einem Stützrohr gebildet ist und dass die jeweiligen Kanäle (28) seitlich von vorstehenden Längsrippen (50) eines Stützrohres begrenzt sind.

3. Filterelement nach Anspruch 2, **dadurch gekennzeichnet, dass** die Kanäle (28) sowohl innen- als auch außenumfangsseitig am Stützrohr (24,26) angeordnet sind.

4. Filterelement nach einem der Ansprüche 1 bis 3, **dadurch gekennzeichnet, dass** die Längsrippen (50) stegartig auf das Stützrohr (24,26) aufgesetzt sind oder dass die unmittelbar benachbart angeordneten Längsrippen (50) paarweise miteinander verbunden außenumfangsseitig eine Stützfläche (68) und innenumfangsseitig den Nutgrund (70) der einzelnen Kanäle (28) bilden.

5. Filterelement nach einem der Ansprüche 1 bis 4, **dadurch gekennzeichnet, dass** das zuinnerst angeordnete Stützelement (30) ein Stützrohr mit Durchlässen als Kanalführung für den Fluidstrom aufweist.

6. Filterelement nach einem der Ansprüche 1 bis 5, **dadurch gekennzeichnet, dass** die jeweilige Filtereinheit (12,14,16) aus einer zylindrischen Filtermatte gebildet ist und dass alle Filtermatten im wesentlichen gleiche Längenmaße in axialer Richtung zur Längsachse (10) aufweisen.

7. Filterelement nach einem der Ansprüche 1 bis 6, **dadurch gekennzeichnet, dass** die Stützelemente (24,26,30) und die Filtereinheiten (12,14,16) jeweils in konzentrischer Anordnung zur Längsachse des Filterelementes angeordnet sind.

8. Filterelement nach einem der Ansprüche 1 bis 7, **dadurch gekennzeichnet, dass** mindestens 20, an einem der Stützelemente (24,26,30) angeordnete Kanäle (28) eine gemeinsame Fluidführung bilden und dass der jeweilige Kanal (28) gegenüber einer zur Längsachse des Filterelementes parallel angeordneten Achse eine Neigung der Drallführung zwischen 10° bis 30°, vorzugsweise von 15° aufweist.

## Claims

1. Filter element for filtration of fluids with at least one filter unit (12, 14, 16) disposed concentrically around its longitudinal axis (10), supported in the direction of the relevant fluid flow on at least one support element (24, 26, 30), whereby at least a part of the support elements (24, 26) is equipped with channels (28) for fluid guidance (22) at least on its side facing the filter unit (12, 14, 16), whereby the channels (28) extend along coiled paths along the support element (24, 26) with their defining longitudinal ribs (50), whereby the relevant channel (28) exits at opposing ends of the relevant support element (24, 26) with its two free ends, whereby the channels (28) extend continuously and free from multiple diversions of the fluid stream along the support element, and whereby the channels (28) engage the relevant support element (24, 28) only partially whilst forming a spin guide for the fluid stream, **characterised in that** a total of three support elements (24, 26, 30) and three filter units (12, 14, 16) is provided, the same disposed in alternating succession concentrically around the longitudinal axis (10) of the filter element, and **in that** the innermost and the outermost filter unit (16,12) can be flowed from the outside in by the fluid stream in the direction of the clean side (32) of the filter element, and **in that** the filter unit (14) between the same can be flowed from both sides towards the inside and the outside.

2. Filter element according to Claim 1, **characterised in that** the relevant support element (24, 26, 30) is formed by a support pipe, and **in that** the relevant channels (28) are limited by projecting longitudinal ribs (50) of a support pipe at the sides.

3. Filter element according to Claim 2, **characterised in that** the channels (28) are disposed around the inner as well as the outer circumference of the support pipe (24, 26).

4. Filter element according to one of the Claims 1 to 3, **characterised in that** the longitudinal ribs (50) are positioned on the support pipe (24, 26) in the form of bridges, or **in that** the longitudinal ribs (50) positioned immediately adjacent to each other are connected with each other in pairs around the outer circumference of a support surface (68), and form the groove base (70) of the individual channels (28) around the inner circumference.

5. Filter element according to one of the Claims 1 to 4, **characterised in that** the innermost support element (30) comprises a support pipe with passages as channel guides for the fluid stream.

6. Filter element according to one of the Claims 1 to 5, **characterised in that** the relevant filter unit (12, 14, 16) is formed from a cylindrical filter mat, and **in that** all filter mats comprise substantially identical longitudinal dimensions in an axial direction to the longitudinal axis (10).

7. Filter element according to one of the Claims 1 to 6, **characterised in that** the support elements (24, 26, 30) and the filter units (12, 14, 16) are each disposed in a concentric arrangement to the longitudinal axis of the filter element.

8. Filter element according to one of the Claims 1 to 7, **characterised in that** at least 20 channels (28) disposed on one of the support elements (24, 26, 30) form a common fluid guide, and **in that** the relevant channel (28) comprises an incline of the spin guide of between 10° and 30°, preferably of 15° in relation to the axis extending parallel to the longitudinal axis of the filter element.

## Revendications

1. Élément filtrant pour filtrer des fluides, comportant au moins une unité (12, 14, 16) de filtration qui est disposée concentriquement autour de l'axe (10) longitudinal de l'élément filtrant et qui s'appuie sur au moins un élément (24, 26, 30) de soutien dans la direction de l'écoulement respectif du flux de fluide, au moins une partie des éléments (24, 26) de soutien étant pourvue, au moins sur son côté tourné vers l'unité (12, 14, 16) de filtration, de canaux (28) pour le guidage (22) du fluide, les canaux (28) s'étendant par leurs nervures (50) longitudinales qui les délimitent en trajectoires spirales le long de l'élément (24, 26) de soutien, le canal (28) respectif débouchant par ses deux extrémités libres aux extrémités opposées de l'élément (24, 26) de soutien respectif, les canaux (28) s'étendant continûment le long de l'élément de soutien sans déviations multiples du flux de fluide, et sachant que les canaux (28) n'entourant que partiellement l'élément (24, 26) de soutien respectif, en formant un guide de giration pour le flux de fluide, **caractérisé en ce qu'**il est prévu au total trois éléments (24, 26, 30) de soutien et trois unités (12, 14, 16) de filtration, qui sont disposés concentriquement autour de l'axe (10) longitudinal de l'élément filtrant en se succédant alternativement, **en ce que** l'unité (16) de filtration la plus intérieure et l'unité (12) de filtration la plus extérieure peuvent être traversées de l'extérieur vers l'intérieur par le flux de fluide en direction du côté (32) de fluide purifié de l'élément filtrant, et **en ce que** l'unité (14) de filtration intermédiaire peut être abordée des deux côtés par le flux s'écoulant vers l'intérieur et vers l'extérieur.

2. Élément filtrant suivant la revendication 1, **caractérisé en ce que** l'élément (24, 26, 30) de soutien respectif est constitué d'un tube de soutien, et **en ce que** les canaux (28) respectifs sont délimités latéralement par des nervures (50) longitudinales saillantes d'un tube de soutien.

3. Élément filtrant suivant la revendication 2, **caractérisé en ce que** les canaux (28) sont disposés sur le tube (24, 26) de soutien tant sur le pourtour intérieur que sur le pourtour extérieur.

4. Élément filtrant suivant l'une des revendications 1 à 3, **caractérisé en ce que** les nervures (50) longitudinales sont placées à la manière d'entretoises sur le tube (24, 26) de soutien, ou **en ce que** les nervures (50) longitudinales qui sont directement voisines forment, en étant reliées entre elles par paires, sur le pourtour extérieur une surface (68) de soutien et sur le pourtour intérieur le fond (70) de rainure des canaux (28) individuels.

5. Élément filtrant suivant l'une des revendications 1 à 4, **caractérisé en ce que** l'élément (30) de soutien le plus intérieur comporte un tube de soutien pourvu de passages comme canal de guidage pour le flux de fluide.

6. Élément filtrant suivant l'une des revendications 1 à 5, **caractérisé en ce que** l'unité (12, 14, 16) de filtration respective est constituée d'un mat filtrant cylindrique, et **en ce que** tous les mats filtrants possèdent sensiblement la même longueur en direction axiale par rapport à l'axe (10) longitudinal.

7. Élément filtrant suivant l'une des revendications 1 à 6, **caractérisé en ce que** les éléments (24, 26, 30) de soutien et les unités (12, 14, 16) de filtration sont respectivement disposés concentriquement par rapport à l'axe longitudinal de l'élément filtrant.

8. Élément filtrant suivant l'une des revendications 1 à 7, **caractérisé en ce qu'**au moins 20 canaux (28) disposés sur un des éléments (24, 26, 30) de soutien forment un guide de fluide commun, et **en ce que** le canal (28) respectif possède, par rapport à un axe disposé parallèlement à l'axe longitudinal de l'élément filtrant, une inclinaison du guide de giration comprise entre 10° et 30°, de préférence égale à 15°.
